Europäisches Patentamt

European Patent Office

Office européen des brevets

(19)

(11) Veröffentlichungsnummer: **0 001 201**
**B1**

(12) **EUROPÄISCHE PATENTSCHRIFT**

(45) Veröffentlichungstag der Patentschrift: **29.07.81**

(21) Anmeldenummer: **78100048.4**

(22) Anmeldetag: **01.06.78**

(51) Int. Cl.³: **B 21 B 35/14, B 23 D 33/00**

(54) Vorrichtung zum Abstützen von zwei ein Arbeitswellenpaar eines Bandgerüstes antreibenden Gelenkwellen während eines Arbeitswellenwechsels.

(30) Priorität: **27.09.77 AT 6881/77**

(43) Veröffentlichungstag der Anmeldung:
**04.04.79 Patentblatt 79/7**

(45) Bekanntmachung des Hinweises auf die Patenterteilung:
**29.07.81 Patentblatt 81/30**

(84) Benannte Vertragsstaaten:
**BE DE FR GB SE**

(56) Entgegenhaltungen:
**AT - B - 221 460**
**AT - B - 272 245**
**DE - A - 2 027 920**
**DE - A - 2 522 063**
**DE - A - 2 558 582**
**DE - B - 1 022 997**
**US - A - 3 543 556**

(73) Patentinhaber: **VOEST-ALPINE Aktiengesellschaft**
**Werksgelände**
**A-4010 Linz (AT)**

(72) Erfinder: **Haslhofer, Hubert,Ing.**
**Hörzingerstrasse 40**
**A-4020 Linz (AT)**

(74) Vertreter: **Hübscher, Gerhard, Dipl.-Ing.**
**Patentanwälte Dipl.-Ing. Gerhard Hübscher Dipl.-Ing. Helmut Hübscher Dipl.-Ing. Heiner Hübscher**
**Spittelwiese 7**
**A-4020 Linz (AT)**

Vorrichtung zum Abstützen von zwei ein Arbeitswellenpaar eines Bandgerüstes antreibenden Gelenkwellen während eines Arbeitswellenwechsels

Die Erfindung bezieht sich auf eine Vorrichtung zum Abstützen von zwei ein Arbeitswellenpaar eines Bandgerüstes antreibenden Gelenkwellen während eines Arbeitswellenwechsels mit einem der Höhe nach verstellbaren Gestell, das je ein vertikal einstellbares Auflager für die beiden übereinander liegenden, abhebbaren Gelenkwellen trägt, die zum selbständigen Lösen der sie mit den Arbeitswellen verbindenden Kupplungen in ihrer Länge verkürzbar sind.

Bei einer Vorrichtung dieser Art (DE—B—1 022 997) sind die beiden Auflager für die Gelenkwellen in zwei übereinander angeordneten, um parallele, horizontale Achsen schwenkbaren Rahmen gelagert, die auf der von den Schwenkachsen abgewandten Seite in einem gemeinsamen Gestell abgestützt sind. Da dieses Gestell mit Hilfe eines Hydraulikzylinders der Höhe nach verstellt werden kann, ergibt sich für die Rahmen eine Verstellung nach Art eines Gelenkparallelogrammes, so daß der vertikale Abstand der Auflager bei der Höhenverstellung über das gemeinsame Gestell gleich bleibt. Um den Abstand der Auflager voneinander dem Abstand der Arbeitswellen voneinander angleichen zu können, sind die Auflager in den Rahmen vertikal einstellbar gelagert, und zwar über je einen schwenkverstellbaren Hebel, der an einem Hebelarm das Auflager trägt und mit seinem anderen Hebelarm an einem Schraubentrieb angeschlossen ist.

Nachteilig bei dieser bekannten Konstruktion ist zunächst, daß bei der Höhenverstellung der Auflager deren Neigung zwangsläufig verstellt wird, was bei zylindrischen, an die Gelenkwellen angepaßten Abstützflächen zu Schwierigkeiten führen kann. Darüber hinaus ist aber bei der Verstellung der Auflager kein Bezug auf die Durchlaufebene des zu bearbeitenden Bandes gegeben, so daß bei der üblichen Verstellung der Arbeitswellen symmetrisch zur Durchlaufebene des Bandes die Anpassung der Höhenlage der Auflager an die jeweiligen Höhenlagen der Arbeitswellen erschwert ist.

Werden die Auflager mit Hilfe von Spindeltrieben der Höhe nach verstellt, deren Spindeln miteinander durch eine lösbare Kupplung verbunden sind (DE—A—2 522 063), so können die Auflager gemeinsam und auch für sich verstellt werden, je nachdem, ob die Spindeln gekuppelt sind oder nicht. Obwohl die Auflager bei einer solchen Konstruktion nicht bei der Höhenverstellung verschwenkt werden, fehlt auch hier der Bezug auf die Durchlaufebene des Bandes, so daß bei einem Arbeitswellenwechsel eine umständliche Verstellung der Auflager notwendig ist, insbesondere, wenn der Abstand der Arbeitswellen voneinander unterschiedlich ist. In diesem Zusammenhang muß bedacht werden, daß eine Endlage über die Antriebe für die Auflager einfach und genau erreicht werden kann, nicht aber Zwischenlagen.

Der Erfindung liegt somit die Aufgabe zugrunde, eine Vorrichtung der eingangs geschilderten Art so zu verbessern, daß mit einfachen konstruktiven Mitteln die Höhenangleichung der Auflager für die Gelenkwellen an die jeweiligen Arbeitswellen vereinfacht und das Auswechseln der Arbeitswellen automatisiert werden kann.

Die Erfindung löst die gestellte Aufgabe dadurch, daß die Auflager mittels im Gestell gelagerter Spindeltriebe gegengleich verstellbar sind, deren Spindeln gegensinnige Steigungen aufweisen und eine gemeinsame Welle bilden.

Da die Auflager nicht unabhängig voneinander, sondern nur gegengleich verstellt werden können, ist die symmetrische Bewegung der beiden Gelenkwellen bezüglich der Durchlaufebene des Bandes durch das Bandgerüst sichergestellt, so daß mit einem einzigen Antrieb das Auslangen gefunden werden kann und nur dieser Antrieb entsprechend gesteuert werden muß. Die Lagerung der Spindeltriebe in dem der Höhe nach verstellbaren Gestell bietet dabei die Möglichkeit, die Auflager während des Antriebs des Gerüstes zur Vermeidung von unerwünschten Reibungen abzusenken, ohne daß die einfache Ausrichtung der Gelenkwellen gegenüber neu anzukuppelnden Arbeitswellen verloren ginge, weil zu diesem Zweck das Gestell lediglich wieder in seine Arbeitslage zurückgebracht werden muß, in der die bezüglich der Bandebene symmetrische Verstellbewegung der die Kupplung tragenden Gelenkwellenenden sichergestellt ist. Die Verstellung des Gestelles braucht folglich nur zwischen zwei Endlagen zu erfolgen.

Besitzen die Auflager in weiterer Ausgestaltung der Erfindung eine quer zu den Gelenkwellen gerichtete Gleitfläche für diese Gelenkwellen, so wird in einfacher Weise einer allfälligen Horizontalverstellung der Arbeitswellen Rechnung getragen. Über die Selbstfindeeinrichtung der Kupplungen kann nämlich in einem solchen Fall die Gelenkwelle verschoben werden.

Da die Auflager mit ihrem Verstelltrieb in einem der Höhe nach verstellbaren Gestell gelagert sind, wäre es naheliegend, den Antrieb für den Verstelltrieb ebenfalls in diesem Gestell unterzubringen. Diese maßnahme würde aber einen vergleichsweise schweren Gestellantrieb bedingen. Aus diesem Grunde ist der Antrieb für die Spindeltriebe in weiterer Ausbildung der Erfindung ortsfest gelagert und über eine axiale Verschiebung der Spindeln zulassende Kupplungen mit den Spindelwellen verbunden. Diese Kupplungen, die beispielsweise als Vielnutenverbindungen ausgeführt sein können, müssen selbstverständlich eine entsprechende Drehmomentübertragung gewährleisten.

Um eine besonders einfache Konstruktion zu erhalten, kann das als Joch ausgebildete und über einen Kolbentrieb verstellbare Gestell mit den in ihm gelagerten Spindeln und den Auflagern einen geschlossenen Rahmen bilden. Dadurch erübrigt sich ein eigener Gestellrahmen, was eine besonders leichte und wenig aufwendige Konstruktion ermöglicht.

Damit schließlich der Kupplungsvorgang zwischen den Gelenkwellen und den Arbeitswellen des Bandgerüstes automatisch durchgeführt werden kann, kann der Antrieb für den Verstelltrieb für die Auflager über eine Meßeinrichtung für den gegenseitigen Abstand der Arbeitswellen steuerbar sein, so daß der Abstand der Auflager selbsttätig an den gegenseitigen Abstand der Arbeitswellen angepaßt wird. Dabei ist selbstverständlich auch eine Regelung über eine Istwertmessung an den beiden Auflagern möglich. Voraussetzung für diese Automatisiermöglichkeit ist natürlich, daß durch die zwangsweise gegengleiche Verstellung der Auflager die richtige Lage der Auflager bezüglich der Blechdurchlaufebene mit Sicherheit eingehalten wird, was durch die beispielsweise über Anschläge einstellbare Arbeitsstellung des Gestells einfach erreicht wird.

In der Zeichnung ist der Erfindungsgegenstand in einem Ausführungsbeispiel schematisch dargestellt. Es zeigen.

Fig. 1 eine an ein Scherengerüst gekuppelte erfindungsgemäße Vorrichtung zum Abstützen der beiden Antriebs-Gelenkwellen im Teilschnitt und

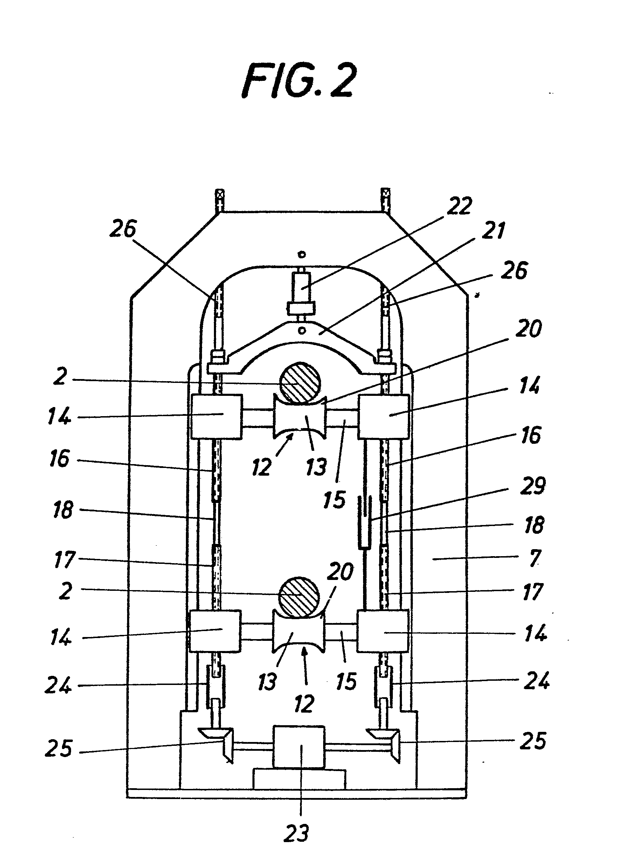

Fig. 2 diese Vorrichtung in Ansicht in größerem Maßstab.

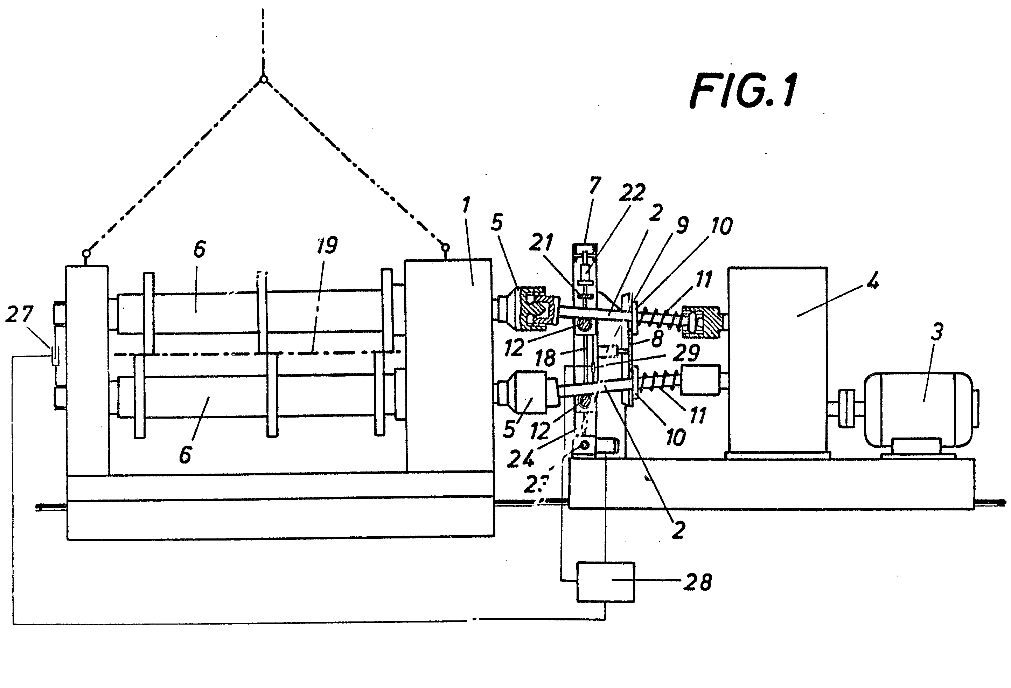

Das in Fig. 1 dargestellte Scherengerüst 1, das als Wechselgerüst als Ganzes mit Hilfe einer geeigneten Hebeeinrichtung abgehoben werden kann, wird über zwei Gelenkwellen 2 von einem an einen Motor 3 angeschlossenen Verteilergetriebe 4 angetrieben. Die Gelenkwellen 2, die teleskopartig ausgebildet sind, können dabei in ihrer Länge verkürzt werden, um die Kupplungen 5 zwischen den Gelenkwellen 2 und den als Messerwellen ausgebildeten Arbeitswellen 6 außer Eingriff bringen zu können. Zu diesem Zweck muß nämlich der an den Gelenkwellen 2 befestigte Kupplungsteil aus dem an der Arbeitswelle 6 angebrachten Kupplungsteil herausgezogen werden. Dies geschieht über ein an einem Rahmen 7 verschiebbar gelagertes Ausrückschild 8, das mit Hilfe eines Hydraulikzylinders 9 in horizontaler Richtung verstellt werden kann und auf Mitnahmeflansche 10 der Gelenkwellen 2 wirkt. Bei einer entsprechenden Beaufschlagung des Hydraulikzylinders 9 werden daher die teleskopartig ausgebildeten Gelenkwellen 2 über die Mitnehmerflansche 10 gegen die Kraft von Rückstellfedern 11 zusammengeschoben, wodurch die Kupplungen 5 gelöst werden.

Damit die Gelenkwellen 2 im entkuppelten Zustand abgestützt werden, sind zwei Auflager 12 vorgesehen, die der Höhe nach verstellt werden können. Diese Auflager 12 bestehen jeweils aus einer Rolle 13, die auf einer in zwei Lagerkörpern 14 gehaltenen Achse 15 sitzen und frei drehbar sind. Die auf diesen Rollen 13 aufruhenden Gelenkwellen 2 können daher trotz dieser Abstützung ohne besonderen Kraftaufwand in ihrer Länge verstellt werden.

Zur Höhenverstellung der Auflager 12 dienen jeweils Spindeltriebe, deren Spindeln 16 und 17 gegensinnige Steigungen besitzen und eine gemeinsame Welle 18 bilden, so daß durch den Antrieb dieser Welle 18 die ein Muttergewinde für die Spindeln aufweisenden Lagerkörper 14 für das obere und untere Auflager 12 zwangsweise gegengleich verstellt werden. Damit wird erreicht, daß die Verstellung der Auflager 12 stets symmetrisch zur Durchlaufebene 19 des zu bearbeitenden Blechbandes verläuft, wie dies auch für die Verstellung der Arbeitswalzen 6 mittels eines nicht näher dargestellten Exzenters gilt.

Dadurch die Exzenterverstellung der Arbeitswalzen 6 nicht nur der vertikale Abstand dieser Wellen 6 beeinflußt wird, sondern auch deren Lage in horizontaler Richtung, muß dafür gesorgt werden, daß sich die Gelenkwellen 2 entsprechend der jeweiligen horizontalen Lage der Arbeitswellen 6 ausrichten können. Zu diesem Zweck weisen die Auflager 12 Gleitflächen für die Gelenkwellen 2 auf, wobei diese Gleitflächen im Ausführungsbeispiel durch den Mantel der Rollen 13 gebildet werden. Um das Abgleiten der Gelenkwellen 2 von den Rollen 13 zu verhindern, bilden diese im Stirnwandbereich hochgezogene Anschläge 20.

Über die der Höhe nach gegengleich verstellbaren Auflager 12 können die Kupplungsenden der Gelenkwellen 2 in einfacher Weise genügend genau an die Höhenlage des Arbeitswellenpaares 6 eines neuen Scherengerüstes 1 angepaßt werden, so daß die selbstfindenden Kupplungen 5 beim Zurückziehen des Ausrückschildes 8 ineinander eingreifen können. Eine durch die Exzenterverstellung der Arbeitswellen 6 bedingte horizontale Verschiebung der Arbeitswellen 6 wird dabei durch die Möglichkeit der Querverschiebung der Gelenkwellen 2 auf den Auflagern 12 ausgeglichen, da die Gelenkwellen 2 über die selbstfindenden Kupplungen 5 bei deren Einrückvorgang entsprechend ausgerichtet werden.

Damit nun beim Betrieb des Scherengerüstes 1 die Gelenkwellen 2 nicht auf den Auflagern 12 schleifen können, werden die Auflager 12 nach unten abgesenkt, was jedoch wegen der gegengleichen Verstellbewegung nicht über die Spindeltriebe erreicht werden kann. Zu diesem Zweck sind die Spindelwellen 18 in einem als Joch ausgebildeten Gestell 21 drehbar aber axial unverschiebbar gehalten, das über einen Hydraulikzylinder 22 gegenüber dem Rahmen 7 zusätzlich der Höhe nach verstellt werden kann. Da das Gestell 21 mit den Spindelwellen 18 und den Auflagern 12 einen geschlossenen Rahmen bildet, ergeben sich sehr einfache Konstruktionsverhältnisse, die trotz des geringen Aufwandes eine ausreichende Stabilität gewährleisten.

Um den Antrieb 23 für die Spindelwellen 18 nicht ebenfalls der Höhe nach verstellen zu müssen, sind die Spindelwellen 18 über Vielnutenhülsen 24 od.dgl. mit den zum Antrieb 23 führenden Winkelgetrieben 25 verbunden, wobei diese Vielnutenhülsen 24 die axiale Verschiebbarkeit der Spindelwellen 18 und die Drehmomentübertragung sicherstellen.

Damit ein allenfalls vorhandenen Spiel ausgeglichen und stets die richtige Lage der Auflager 12 gegenüber der Durchlaufebene 19 sichergestellt werden kann, sind schraubverstellbare Anschlagstangen 26 im Rahmen 7 vorgesehen, mit deren Hilfe die Arbeitsstellung des Gestells 21 justiert wird.

Die dargestellte Konstruktion eignet sich auch zum selbsttätigen Ankuppeln neuer Gerüste, da der Antrieb 23 für die Spindeltriebe 16 und 17 ohne weiteres in Abhängigkeit vom gegenseitigen Abstand der Arbeitswellen 6 des Scherengerüstes 1 angesteuert werden kann. Es braucht hiefür lediglich der Abstand der Arbeitswellen 6 über eine geeignete Meßeinrichtung 27, im Ausführungsbeispiel ein induktiver Wegaufnehmer, gemessen und mit diesem Sollwert ein Steuergerät 28 beaufschlagt zu werden, das den Antrieb 23 steuert. Um mit Sicherheit die erforderliche Einstellung zu erhalten, kann diese Steuerung zusätzlich zu einem Regelkreis ergänzt werden, indem auch der Abstand der Auflager 12 voneinander durch ein Meßeinrichtung 29 erfaßt und der damit erhaltene Istwert zum Vergleich mit dem Sollwert dem Steuergerät 28 zugeleitet wird.

## Patentansprüche

1. Vorrichtung zum Abstützen von zwei ein Arbeitswellenpaar (6) eines Bandgerüstes (1) antriebenden Gelenkwellen (2) während eines Arbeitswellenwechsels mit einem der Höhe nach verstellbaren Gestell (21), das je ein vertikal einstellbares Auflager (12) für die beiden übereinander liegenden, abhebbaren Gelenkwellen (2) trägt, die zum selbständigen Lösen · der sie mit den Arbeitswellen (6) verbindenden Kupplungen (5) in ihrer Länge verkürzbar sind, dadurch gekennzeichnet, daß die Auflager (12) mittels im Gestell (21) gelagerter Spindeltriebe gegengleich verstellbar sind, deren Spindeln (16, 17) gegensinnige Steigungen aufweisen und eine gemeinsame Welle (18) bilden.

2. Vorrichtung nach Anspruch 1, dadurch gekennzeichnet, daß die Auflager (12) eine quer zu den Gelenkwellen (2) gerichtete Gleitfläche für die Gelenkwellen (2) besitzen.

3. Vorrichtung nach Anspruch 1 oder 2, dadurch gekennzeichnet, daß der Antrieb (23) für die Spindeltriebe ortsfest gelagert ist und über eine axiale Verschiebung der Spindeln (16, 17) zulassende Kupplungen (24) mit den Spindelwellen (18) verbunden ist.

4. Vorrichtung nach einem der Ansprüche 1 bis 3, dadurch gekennzeichnet, daß das als Joch ausgebildete und über einen Kolbentrieb (22) verstellbare Gestell (21) mit den in ihm gelagerten Spindeln (16, 17) und den Auflagern (12) einen geschlossenen Rahmen bildet.

5. Vorrichtung nach einem der Ansprüche 1 bis 4, dadurch gekennzeichnet, daß der Antrieb (23) für den Verstelltrieb (16, 17) für die Auflager (12) über eine Meßeinrichtung (27) für den gegenseitigen Abstand der Arbeitswellen (6) steuerbar ist.

## Revendications

1. Dispositif pour soutenir deux arbres articulés (2) entraînant und paire d'arbres de travail (6) d'une cage à feuillards (1) pendant un changement d'arbres de travail, comportant un bâti (21) réglable en hauteur portant, pour chacun des deux arbres articulés (2) superposés et pouvant se relever, un appui (12) réglable verticalement, la longueur des arbres pouvant être diminuée pour détacher indépendamment les accouplements (5) qui les relient aux arbres de travail (6), dispositif caractérisé par le fait que les appuis (12) sont réglables de façon diamétralement opposée au moyen de mécanismes à tige filetée montés dans le bâti (21) et dont les tiges filetées (16, 17) présentent des pas de sens opposé et forment un arbre commun (18).

2. Dispositif selon la revendication 1, caractérisé par le fait que les appuis (12) présentent pour les arbres articulés (2) une surface de glissement dirigée transversalement aux arbres articulés.

3. Dispositif selon l'une des revendications 1 et 2, caractérisé par le fait que l'entraînement (23) des mécanismes à tige filetée est monté en position fixe et est relié aux arbres de tige filetée (18) par l'intermédiaire d'accouplements (24) permettant un coulissement axial des tiges filetées (16, 17).

4. Dispositif selon l'une des revendications 1 à 3, caractérisé par le fait que le bâti (21), conçu sous forme de chape et réglable par l'intermédiaire d'un mécanisme á piston (22), forme, avec les tiges filetées (16, 17) qui y sont montées et les appuis (12), un cadre fermé.

5. Dispositif selon l'une des revendications 1 à 4, caractérisé par le fait que l'entraînement (23) du mécanisme de réglage (16, 17) des appuis (12) peut être commandé par l'intermédiaire d'un dispositif de mesure (27) de la distance entre les arbres de travail (6).

## Claims

1. Apparatus for supporting two universal-joint shafts (2), which drive a pair of working shafts (6) of a strip-rolling stand (1), during an exchange of the working shafts, comprising a frame (21), which is adjustable in height and comprises a vertically adjustable support (12) for each of the two liftable universal-joint shafts (2), which lie one over the other and can be shortened in length for an automatic disengagement of the couplings (5) connecting the universal-joint shafts to the working shafts (6), characterized in that the supports (12) are capable of equal and opposite adjustments by means of power screw means, which are mounted in the frame (21) and have oppositely handed screws (16, 17), which constitute a common shaft.

2. Apparatus according to claim 1, characterized in that the supports (12) have for the universal-joint shafts (2) a sliding surface, which extends transversely to the universal-joint shafts (2).

3. Apparatus according to claim 1 or 2, characterized in that the drive (23) for the power screw means is stationary and is connected to the screw shafts (18) by couplings (24), which permit an axial displacement of the screws (16, 17).

4. Apparatus according to any of claims 1 to 3, characterized in that the frame (21) consists of a yoke and is adjustable by a piston-cylinder device (22) and together with the screws (16, 17) mounted in the frame and with the supports (12) constitutes a closed frame.

5. Apparatus according to any of claims 1 to 4, characterized in that the drive means (23) for the mechanism (16, 17) for adjusting the supports (12) is adapted to be controlled by means (27) for measuring the spacing of the working shafts (6).

**FIG.1**

# FIG.2